# EUROPÄISCHE PATENTSCHRIFT

(11) **EP 2 803 537 B1**
(45) Veröffentlichungstag und Bekanntmachung des Hinweises auf die Patenterteilung: **24.08.2016**
(21) Anmeldenummer: 14163214.1
(22) Anmeldetag: 02.04.2014
(51) Int. Cl.: B60R 21/08, B60R 21/2346, B60R 21/18

(54) **Lanze zum Leiten eines Gases in einen Airbelt**
Lance for guiding a gas into an air belt
Lance destinée à conduire un gaz dans une ceinture de sécurité gonflable

(30) Priorität: 14.05.2013 AT 4012013
(43) Veröffentlichungstag der Anmeldung: 19.11.2014
(73) Patentinhaber: A. Haberkorn & Co GmbH, 4240 Freistadt (AT)
(72) Erfinder: Gruber, Raphael, 4320 Perg (AT); Landskron, Armin, 4040 Linz (AT)
(74) Vertreter: Ellmeyer, Wolfgang

(56) Entgegenhaltungen:
- EP-A2- 1 433 672
- EP-A2- 2 423 053
- DE-A1- 19 804 365
- DE-A1-102004 043 813
- DE-A1-102010 023 875
- DE-A1-102010 026 546
- DE-A1-102011 111 946

## Beschreibung

Diese Erfindung betrifft eine Lanze zum Leiten eines Gases in einen Airbelt, wobei die Lanze mit einer Gaseinbringungsvorrichtung zum Einbringen eines Gases in die Lanze und in weiterer Folge in den Airbelt koppelbar ist.

Die Lanze ist nach dem Stand der Technik mit einem Ende mit der Gaseinbringungsvorrichtung gekoppelt. Die Lanze weist am anderen Ende eine definierte Öffnung auf, über welche das Gas in den Airbelt austritt. Das Dokument DE 198 04 365 A1 zeigt eine Lanze nach dem Oberbegriff des Anspruchs 1.

EP1056894B1 offenbart ein aufblasbares Gurtband, welches im Unterschied zu der im Folgenden offenbarten erfindungsgemäßen Lanze zwei Gewebeschichten und keine Kunststoffschicht als eine Sperrschicht umfasst.

DE102008055769 betrifft eine Anordnung zur Anbindung eines aufblasbaren Sicherheitsgurtes an einen Beschlag.

DE102010052652 betrifft eine Anordnung einer Lanze innerhalb eines Gurtes, wobei die sich in das Innere des Gurtes erstreckt. Es findet sich in DE102010052652 kein Hinweis über eine spezielle Ausbildung der Lanze aus bestimmten Materialien. Ebenso sind in DE102010052652 keine Angaben betreffend der Konstruktion der Lanze enthalten. Aus der Offenbarung von DE102010052652 lassen sich keine ähnlichen Produkteigenschaften wie die der im Folgenden offenbarten erfindungsgemäßen Lanze ableiten.

DE2008048 offenbart ebenso nicht die Verwendung von besonderen Materialien oder die Kombination dieser zur Herstellung einer Lanze. Es findet sich in DE2008048 keine Angabe betreffend einer besonderen Konstruktion der offenbarten Lanze.

DE4305291 betrifft die Verwendung von Airbags zum Schutz von Insassen von Fahrzeugen.

WO9851542A1 beschreibt einen Sicherheitsgurt umfassend einen Airbelt.

AT300591 hat einen Airbelt zum Inhalt, welcher luftdurchlässig zur Abgabe von Luft durch den verwendeten Stoff ausgebildet ist.

EP0366518 beschreibt einen Sicherheitsgurt umfassend einen Airbelt.

DE3714088 offenbart ein Gurtband für einen Sicherheitsgurt.

Die im Folgenden offenbarte Erfindung stellt sich die Aufgabe eine Lanze als ein Teil eines Airbelts bereitzustellen, welche Lanze sich wegen ihrer geringen, für den Benutzer annähernd nicht spürbaren Dicke und für den Benutzer angenehmen, hohen Flexibilität auszeichnet. Die erfindungsgemäße Lanze findet beispielsweise bei aufblasbaren Sicherheitsgurten Anwendung, welche an den Körper einer Person anliegend angelegt werden. Ein Beispiel eines aufblasbaren Sicherheitsgurtes kann ein Airbelt darstellen.

Eine erfindungsgemäße Lanze zeichnet sich dadurch aus, dass die Lanze ein Schlauchgewebe umfasst, welches Schlauchgewebe eine Vielzahl von sich in Kettfadenrichtung erstreckender Kettfäden und eine Vielzahl von sich in Schussfadenrichtung erstreckender Schussfäden aus einem Schussfadenmaterial umfasst, wobei das lokale Verhältnis der Anzahl der Kettfäden pro 1,0cm Messlänge zu der Anzahl der Schussfäden pro Gewebelage und pro 1,0cm 1,5 bis 3,8, vorzugsweise 2,16 ist, sodass die Lanze im Inneren des Airbelts mitsamt dem Airbelt um eine Umlenkungsvorrichtung führbar ist, und zumindest als eine Gassperrschicht ausgebildete Kunststoffschicht umfasst, sodass die Lanze eine definierte Gasdichtigkeit aufweist.

Das Schlauchgewebe kann nach der Leinwandbindungstechnik mit einem zum Schussfaden gehobenen und gesenkten Kettfaden hergestellt werden. Das Schlauchgewebe kann weiteres in Teilbereichen nach anderen Bindungstechniken hergestellt sein.

Die Kunststoffschicht kann in in einem Schlauchgewebeteilbereich des Schlauchgewebes integrativ und/oder an zumindest einer inneren und/oder äußeren Mantelteiloberfläche der Manteloberfläche des Schlauchgewebes ausgebildet sein.

Die Kunststoffschicht kann an der inneren und/oder äußeren Manteloberfläche in zumindest Teilbereichen aufgebracht sein. Die Kunststoffschicht kann eine an die Struktur des Schlauchgewebes angepasste oder glatte Oberfläche aufweisen. Die Oberfläche der Kunststoffschicht kann strukturiert sein. Eine mögliche Ausführungsform der strukturierten Oberfläche der Kunststoffschicht ist das Vorsehen von Rippen. Die Rippen können parallel zu der Längsrichtung der erfindungsgemäßen Lanze ausgebildet sein.

Eine weitere mögliche Ausführungsform der strukturierten Oberfläche ist das Vorsehen von netzartig angeordneten Rippen. Es können hier Rippen vorgesehen werden, welche in einem Winkel zu der Längsachse einander kreuzend angeordnet sind.

Die oben erwähnten Rippen können als Verstärkungsrippen in Bezug auf die Aufnahme einer Kraft oder eines Drucks, insbesondere eines Innendruckes vom Fachmann vorgesehen werden.

Die Rippen können weiters als Versteifungselemente wirkend die Deformation der unaufgeblasenen oder aufgeblasenen Lanze beeinflussen. Durch die Rippen kann bei einer nicht aufgeblasenen Lanze unterbunden werden, dass der Querschnitt der Lanze geschlossen ist. Dieses Problem besteht insbesondere im Bereich der Führung der Lanze um die Umlenkungsvorrichtung.

Mittels der Kunststoffschicht werden die Poren des Gewebes in einem definierten Ausmaß verschlossen, wodurch eine definierte Gasdichtigkeit der erfindungsgemäßen Lanze erreicht wird. Der Fachmann definiert durch die Gasdichtigkeit der Lanze und/oder durch das Vorsehen von weiteren Öffnungen in der Manteloberfläche der Lanze den weiteren Austritt des Gases über die Manteloberfläche der Lanze in den Airbelt.

Das Schlauchgewebe als ein Teil der erfindungsgemäßen Lanze ist vorzugsweise nahtlos und umfasst keine Häkelkante. Nahtlose Schlauchgewebe sind mittels Rundwebmaschinen oder Schützenwebmaschinen herstellbar. Das Schlauchgewebe kann jedoch auch eine Häkelkante aufweisen. Derartige Schlauchgewebe werden mit Hilfe einer Nadelbandwebmaschine hergestellt. Die hier offenbarte Lanze ist auf keine spezielle Ausführungsform von Schlauchgeweben nach dem Stand der Technik beschränkt.

Da die erfindungsgemäße Lanze ein Schlauchgewebe und eine Kunststoffschicht wie beispielsweise eine Silikonschicht umfasst, weist die erfindungsgemäße Lanze eine für den Benutzer wahrnehmbare, flexible Eigenschaft auf. Diese flexible Eigenschaft der Lanze führt dazu, dass die in einem Airbelt integrierte Lanze für eine Person in einem nur sehr geringen Ausmaß bei Verwendung des Airbelts spürbar ist.

Die flexiblen Eigenschaften der erfindungsgemäßen Lanze erlauben auch das Führen der Lanze im Inneren des Airbelts um einen Umlenkpunkt. Ein Umlenkpunkt kann eine Schlosszunge sein, welche in einem Gurtschloss verankerbar ist.

Eine Lösung oder ein Bestandteil einer Lösung zu der hier diskutierten Aufgabenstellung der hier offenbarten Erfindung liegt darin, eine Lanze aus einem Schlauchgewebe aufweisend ein lokales Verhältnis der Anzahl der Kettenfäden pro 1,0cm Messlänge zu der Anzahl der Schussfäden pro Gewebelage und pro 1,0cm Messlänge von 1,5 bis 3,8 bereitzustellen. In einer Ausführungsform beträgt das Verhältnis der Anzahl der Kettenfäden pro 1,0cm Messlänge zu der Anzahl der Schussfäden pro Gewebelage und pro 1,0cm Messlänge 2,16.

Das oben angeführte Verhältnis kann jeden, auch nicht ganzzahligen Wert in dem angegebenen Bereich wie beispielsweise 1,6, 1,7, 1,8, 1,9, 2,0, 2,1, 2,2, 2,3, 2,4, 2,5, 2,6, 2,7, 2,8, 2,9, 3,0, 3,1, 3,2, 3,3, 3,4, 3,5, 3,6, 3,7, 3,8 aufweisen. Die angegebenen Verhältniszahlen haben weiters einen Einfluss auf zumindest eine der hier offenbarten vorteilhaften Eigenschaften der erfindungsgemäßen Lanze, insbesondere auf den unten angeführten hohen Berstdruck der Lanze, auf die geringe Wanddicke der Lanze, auf die Flexibilität der Lanze und auf die Dichtigkeit der Lanze. Der Fachmann erkennt hierbei weiters, dass die angeführten Eigenschaften der Lanze in einem Zusammenhang zueinander stehen können.

Das oben angeführte Verhältnis kann lokal variieren, wodurch das Schlauchgewebe lokal unterschiedliche mechanische Eigenschaften aufweisen kann.

Das oben angeführte Verhältnis kann vorzugsweise 2,16, somit in einem Bereich zwischen 2,1 und 2,2 sein. Ein gewähltes Verhältnis der Anzahl der Kettenfäden pro 1,0cm Messlänge zu der Anzahl der Schussfäden pro Gewebelage und pro 1,0cm Messlänge in einem Bereich von 2,1 bis 2,2 stellt das Optimum hinsichtlich der Dicke des Schlauchgewebes, der Flexibilität der Lanze im unaufgeblasenen Zustand, der Dichtigkeit des Schlauchgewebes und der mechanischen Eigenschaften wie Berstdruck des Schlauchgewebes dar. Ein derartiges Schlauchgewebe ist mittels Maschinen nach dem Stand der Technik herstellbar.

Die erfindungsgemäße Lanze kann dadurch charakterisiert sein, dass das Schlauchgewebe eine Vielzahl von Kettfäden und eine Vielzahl von Schussfäden umfasst. Die schlauchförmig ausgebildete Lanze kann bei einem Innendurchmesser von 25,0 +/-1,5mm eine Anzahl von 180 +/-5 Kettfäden in Kettfadenrichtung aufweisen. Die Lanze kann in Schussfadenrichtung 104 +/-10 Schussfäden pro 10 cm Erstreckungsrichtung der Lanze und pro Gewebelage der Lanze aufweisen.

Die obige Angabe des Innendurchmessers und der mit dem Innendurchmesser verbundenen Anzahl von Kettfäden und Schussfäden ist beispielhaft anzusehen. Die Erfindung schließt die Herstellung von Schlauchgeweben mit weiteren Innendurchmessern nicht aus. Zur Herstellung eines Schlauchgewebes mit einem weiteren Innendurchmesser wählt der Fachmann eine an den weiteren Innendurchmesser angepasste Anzahl von Kettfäden und Schussfäden aus.

Die Schussfäden und/oder die Kettfäden der Lanze können einen Titer von 500-12000dtex aufweisen. Es können vorzugsweise zur Herstellung der erfindungsgemäßen Lanze Schussfäden und/oder Kettfäden, welche einen Titer von 1100dtex aufweisen, verwendet werden.

Bei Einhaltung der oben angegebenen Charakteristika erfüllt die erfindungsgemäße Lanze einerseits die Anforderungen einer geringen Wandstärke der Lanze und einer hohen Flexibilität der Lanze, andererseits die Anforderungen einer hohen mechanischen Belastbarkeit der Lanze und einer definierten Dichtigkeit der Lanze.

Die erfindungsgemäße Lanze kann als Kettfadenmaterial und/oder als Schussfadenmaterial Polyestermonofil oder Polyester-mulitfil (Polyester: thermoplastische Polyethylenterephthalate - PET / Gruppenbezeichnung PES), Aramid-monofil oder Aramid-multifil (Aramid: aromatische Polyamide - AR), POLYAMID-monofil oder POLYAMID-multifil umfassen.

Der Fachmann wählt das Kettfadenmaterial und das Schussfadenmaterial in Bezugnahme auf die zu erwartenden Belastungen beziehungsweise Anforderungen. Das Kettfadenmaterial und das Schussfadenmaterial können unterschiedliche Materialien sein.

Bei Verwendung von Aramid-multifil als Schussfaden und Polyester-multifil als Kettfaden und Einhaltung der oben angegebenen Charakteristika des Schlauchgewebes zeichnet sich die erfindungsgemäße Lanze durch einen statischen Berstdruck von circa 60,0bar (bei Verwendung von Wasser als Füllmedium) und einem dynamischen Berstdruck von circa 30,0bar (bei Verwendung eines Gasgemisches als Füllmedium) aus. Die Gesamtdicke der Lanze beträgt hierbei circa 1,1mm +/- 0,3mm bei einer Wandstärke von circa 0,55mm +/-0,15mm.

Das Schussfadenmaterial und/oder das Kettfadenmaterial können eine Temperaturbeständigkeit von 150°C bis 180°C aufweisen. Vorzugsweise weist das Schussfadenmaterial eine Temperaturbeständigkeit von mindestens 180°C und das Kettfadenmaterial eine Temperaturbeständigkeit von mindestens 150°C auf. Durch eine entsprechende Materialwahl sind im Wesentlichen die angegebenen Temperaturbeständigkeiten gewährleistbar.

Die Kunststoffschicht kann eine Schicht umfassend Silikon, Polyurethan (Polyurethan - PU), Polyvinylchlorid (Polyvinylchlorid - PVC) und/oder Polytetrafluorethylen (Polytetrafluorethylen - PTFE) sein.

Durch die Materialauswahl der Kunststoffschicht und die Dicke der Kunststoffschicht kann die vorteilhafte Wirkung der Kunststoffschicht auf die erfindungsgemäße Lanze wie beispielsweise die Gasdichtigkeit der Lanze definiert werden. Weitere vorteilhafte Wirkungen sind im Folgenden beschrieben.

Die Kunststoffschicht weist vorteilhaft eine Temperaturbeständigkeit von 180°C auf.

Die Kunststoffschicht kann mittels Verfahren nach dem Stand der Technik auf die Manteloberfläche aufgebracht werden. Ein mögliches Aufbringungsverfahren ist das Rakelverfahren.

Ein Airbelt kann mittels eines Gasgenerators mit einem Gas nach dem Stand der Technik gefüllt werden. Ein Gasgenerator besteht aus einer Anzündeinheit und einem Festtreibstoff. Durch einen Stromimpuls des Steuergerätes wird die Anzündeinheit aktiviert. Diese entzündet den Festtreibstoff, der meist in Tablettenform vorliegt. Das dabei entstehende Gas (ca. 1350 °C) strömt aus dem Gasgenerator gegebenenfalls durch einen Diffuser, weiters über die erfindungsgemäße Lanze in den Airbelt. Durch die Expansion beträgt die Temperatur des in den Luftsack strömenden Gases etwa 150°C.

Hybridgasgeneratoren stellen eine Verbindung aus pyrotechnischem Generator und einem Druckspeicher dar. Sie enthalten also sowohl eine pyrotechnische Ladung zur Gaserzeugung als auch einen Druckspeicher mit circa 200 bis 700 bar vorgespanntem Gas (üblicherweise Heliumgas oder Gasgemische aus Helium und Argon). Diese Systeme können nach dem Stand der Technik bei Airbelts (Gurtairbags) Anwendung finden, da hier geringere Füllgastemperaturen erreicht werden müssen.

Die erfindungsgemäße Lanze kann einen Werkstoff zum Unterbinden eines Durchtrennens der Lanze durch ein scharfkantiges Werkstück wie beispielsweise eines Verschlussteil des Gasgenerators während des Aufblasens der Lanze und gegebenenfalls des Airbelts umfassen.

Vor dem Aufblasen der Lanze wird das Verschlussteil des Gasgenerators von diesem entfernt. Der Verschlussteil wird zufolge des sich aufbauenden oder aufgebauten Druckes in die Lanze geschossen. Das Verschlussteil kann eine scharfkantige Form aufweisen, wobei eine zerstörende Wirkung der scharfkantigen Form des Verschlussteiles auf die Lanze durch den oben angeführten Werkstoff zum Unterbinden eines Durchtrennens der Lanze verhindert wird.

Dieser Werkstoff kann beispielsweise eine hohe Schnittfestigkeit aufweisen. Der Werkstoff zur Unterbindung des Durchtrennens der Lanze kann der für den Kettfaden und/oder für den Schussfaden verwendete Werkstoff sein. Die erwähnte Verwendung des Werkstoffes Aramid als Kettfadenmaterial und/oder als Schussfadenmaterial ist unter anderem wegen der hohen Schnittfestigkeit von Aramid vorteilhaft.

Ebenso kann dieser Werkstoff ein Teil der Kunststoffschicht sein, insbesondere wenn die Kunststoffschicht an der Innenmanteloberfläche oder integrativ im Schlauchgewebe ausgebildet ist.

Die zumindest teilweise vom Airbelt umhüllte Lanze kann einen weiteren Werkstoff zum Unterbinden einer Beschädigung des Airbelts während des Aufblasens der Lanze umfassen.

Es handelt sich hierbei im Wesentlichen um ein Mittel, welches eine Dehnung der Lanze auf eine Grenzform begrenzen kann, wobei der Airbelt bei Erreichen der Grenzform der Lanze keiner übermäßigen Belastung unterworfen ist. Die Begrenzung der möglichen Formveränderung, wie die Dehnung, insbesondere Querdehnung der Lanze kann durch die Ausbildung der Fäden und/oder der Gewebekonstruktion erfolgen. Die Aufgabenstellung der Ausbildung der Fäden umfasst die Auswahl des Materials (Kettfadenmaterial und/oder des Schussfadenmaterial) und/oder die Ausbildung beziehungsweise die Konstruktion des Schlauchgewebes.

Es sei hierbei die vorteilhafte Dehnungseigenschaft von Aramid erwähnt. Ebenso kann die Dehnung durch die Kunststoffschicht begrenzt werden.

Die Erfindung betrifft auch einen Airbelt umfassend eine erfindungsgemäße Lanze oder mehrere Lanzen. Bei Anordnung von mehreren Lanzen in einem Airbelt können erfindungsgemäße Lanzen oder zumindest eine erfindungsgemäße Lanze mit zumindest einer Lanze nach dem Stand der Technik kombiniert werden.

Das Vorsehen von mehreren Lanzen im Inneren eines Airbeltes ist insbesondere für den Vorgang des Aufblasens der Lanze vorteilhaft. Bei einer gleichen Breite des Airbeltes weisen mehrere im Airbelt angeordnete Lanzen einen kleineren Durchmesser auf als eine im Airbelt angeordnete Lanze. Hieraus resultiert ein größerer erzielbarer Aufblasdruck, wodurch wiederum die Dauer des Aufblasens unter Verweis auf die gängige Lehre reduzierbar ist.

Bei Vorsehen von mehreren Lanzen können diese Lanzen mit einer oder mehreren Gaseinbringungsvorrichtung gekoppelt sein.

Dieser Vorteil ist insbesondere bei Verwendung der erfindungsgemäßen Lanze erzielbar, welche um eine Umlenkvorrichtung geführt ist. Im Bereich der Umlenkvorrichtung herrschen insbesondere während des Aufblasens der Lanze besonders hohe Druckverhältnisse, welche durch die erfindungsgemäße Lanze beherrschbar sind.
Figur 1 zeigt einen Querschnitt einer Ausführungsform der erfindungsgemäßen Lanze.
Figur 2 zeigt die Verwendung einer Ausführungsform der erfindungsgemäßen Lanze bei einem Airbelt. Der Airbelt ist in Figur 2 als Dreipunktgurt ausgebildet.

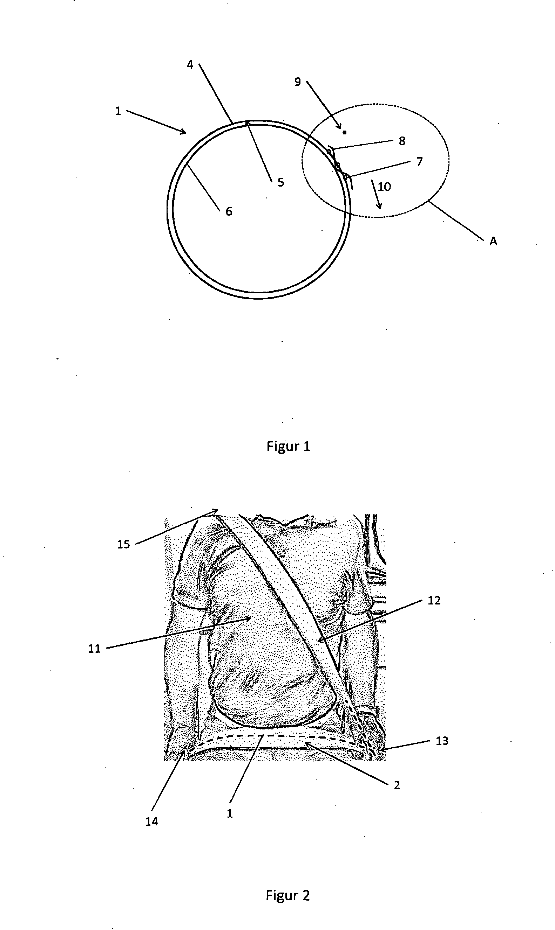

In den Figuren 1 und 2 kennzeichnen die folgenden Bezugszeichen die nachgestellten Elemente eines Airbeltes umfassend eine mögliche Ausführungsform der erfindungsgemäßen Lanze.
- 1.: Lanze
- 2.: Airbelt
- 3.: (frei)
- 4.: Schlauchgewebe
- 5.: Innere Manteloberfläche
- 6.: Kunststoffschicht
- 7.: Kettfaden
- 8.: Schussfaden
- 9.: Kettfadenrichtung
- 10.: Schussfadenrichtung
- 11.: Brust
- 12.: erster Teilbereich (Brustgurt)
- 13.: Umlenkungsvorrichtung
- 14.: erster Anschlagpunkt
- 15.: zweiter Anschlagspunkt

Figur 1 zeigt einen Querschnitt einer möglichen Ausführungsform einer erfindungsgemäßen Lanze 1 für einen Airbelt 2 (in Figur 1 nicht dargestellt). Die in Figur 1 dargestellte Ausführungsform der erfindungsgemäßen Lanze 1 umfasst ein Schlauchgewebe 4, an dessen inneren Manteloberfläche 5 als Sperrschicht eine Kunststoffschicht 6 angebracht ist. Durch die Kombination der Kunststoffschicht 6 mit dem Schlauchgewebe 4 wird zur Befüllung der Lanze 1 mit einem Gas eine definierte Gasdichtigkeit definiert.

Das Schlauchgewebe 4 umfasst eine Vielzahl von Kettfäden 7 aus einem Kettfadenmaterial und eine Vielzahl von Schussfäden 8 aus einem Schussfadenmaterial. Aus Gründen der Übersichtlichkeit sind nur in einem kleinen Ausschnitt A der Figur 1 die Kettfäden 7 und die Schussfäden 8 dargestellt. Das Schlauchgewebe 4 - gleich wie ein sonstiges Gewebe - ist durch die im Kreuzungspunkt von Kettfaden 7 und Schussfaden 8 situierten Poren in Bezugnahme auf seine Gasdichtigkeit charakterisiert. Mittels der auf die innere Manteloberfläche 5 aufgebrachten Kunststoffschicht 6 werden die Poren in einem definierten Ausmaß verschlossen, sodass die erfindungsgemäße Lanze 1 das Kriterium der oben erwähnten Gasdichtigkeit erfüllt.

Die in Figur 1 dargestellten Kettfäden 7 sind entlang dem Umfang des Querschnittes der Lanze 1 angeordnet und erstrecken sich in Längsrichtung der Lanze 1. Die erfindungsgemäße Lanze 1 umfasst ein beschichtetes Schlauchgewebe 4, wobei das Schlauchgewebe 4 eine Vielzahl von Kettfäden 7 und eine Vielzahl von Schussfäden 8 umfasst. Die schlauchförmig ausgebildete Lanze 1 umfasst bei einem Innendurchmesser von 25,0 +/- 1,5mm in Kettfadenrichtung 9 eine Anzahl von 180 +/- 5 in Längsrichtung verlaufenden Kettfäden 7. Die Lanze 1 umfasst weiters pro 10,0 cm Erstreckungsrichtung der Lanze und pro Gewebelage der Lanze eine Anzahl von 104 +/-10 in Schussfadenrichtung 10 verlaufende Schussfäden 8, welche in Querrichtung der Lanze 1 verlaufen. Die angegebenen Toleranzen sind in Figur 1 nicht ersichtlich.

Das Kettfadenmaterial ist bei der in Figur 1 dargestellten Ausführungsform der Lanze 1 Polyester-multifil. Als Schussfadenmaterial wird Aramid-multifil verwendet. Das erwähnte Schussfadenmaterial weist eine Temperaturbeständigkeit von mindestens 180°C, das Kettfadenmaterial eine Temperaturbeständigkeit von mindestens 150°C auf. Die Kettfäden 7 und die Schussfäden 8 weisen jeweils einen Titer von 1100dtex auf.

Die Kunststoffschicht 6 ist aus Silikon hergestellt, welches nach Verfahren nach dem Stand der Technik wie beispielsweise Rakeln auf das Schlauchgewebe 4 aufgebracht wird.

Die Gesamtdicke der Lagen der Lanze 1 beträgt circa 1,1mm +/-0,3mm (Wandstärke circa 0,55mm +/-0,15mm).

Das in der Lanze 1 als Schussfadenmaterial umfasste Aramid dient als Werkstoff zur Unterbindung eines Durchtrennens der Lanze 1 durch ein scharfkantiges Werkstück wie beispielsweise der Verschluss des Gasgenerators. Wegen der geringen Dehnbarkeit von Aramid dient das Schussfadenmaterial auch als Werkstoff zur Begrenzung einer Verformung der Lanze 1. Insbesondere einer Querschnittsdehnung der Lanze 1 während des Vorganges des Aufblasens durch Einleiten eines Gases. Die hier angeführten vorteilhaften Eigenschaften des Werkstoffes Aramid haben bei der in Figur 1 dargestellten Ausführungsform insbesondere während des Zündens des Generators und dem damit hervorgerufenen Ablösen des Verschlussstückes des Generators beziehungsweise beim Aufblasen der Lanze 1 einen Einfluss auf die vorteilhaften Eigenschaften der erfindungsgemäßen Lanze 1.

Figur 2 zeigt die Verwendung einer Ausführungsform der erfindungsgemäßen Lanze 1 als ein Teil eines Airbeltes 2. Der in Figur 2 dargestellte Airbelt 2 ist als Dreipunktgurt ausgeführt. Der Airbelt 2 umfasst eine erfindungsgemäße Lanze 1.

Die in Figur 2 in Form einer gestrichelten Linie dargestellte Lanze 1 ersteckt sich im Inneren des Airbeltes 2 von einem ersten Anschlagpunkt 14 über die Umlenkungsvorrichtung 13 in einen an der Brust 11 der Person anliegenden ersten Teilbereich 12 des Airbeltes 2. In einem zu der Brust 11 der Person benachbarten Bereich ist ein zweiter Anschlagspunkt 15 zur Befestigung des Airbeltes 2 angeordnet. Durch die Erstreckung der Lanze 1 bis in den ersten Teilbereich 12 des Airbeltes 2 wird gewährleistet, dass der erste Teilbereich 12 des Airbeltes 2 durch die Einbringung eines Gases mittels der erfindungsgemäßen Lanze 1 aufblasbar ist. Wegen Erstreckung der Lanze 1 zumindest vom Anschlagspunkt 14 über die Umlenkungsvorrichtung 13 in den ersten Teilbereich 12 des Airbeltes 2, kann die Umlenkungsvorrichtung 13 nicht als Absperrung des aufblasbaren Airbeltes 2 wirken.

Die erfindungsgemäße Lanze 1 weist eine derart hohe mechanische Belastbarkeit auf, dass die Lanze 1 bei Einbringung des Gases und bei einer hohen Zugbelastung der Kettfäden mit einem Berstdruck von circa 30,0 bar belastbar ist. Bei Einbringung des Gases ist die Berstdruckbeständigkeit der Lanze 1 und die Zuglastbeständigkeit der Lanze 1 größer, als eine auftretende Absperrungskraft des Airbelts 2 im Bereich des Bauchgurtes und/oder eine auftretende Absperrungskraft im Bereich der Umlenkungsvorrichtung 13. Dadurch wird gewährleistet, dass das vom Gasgenerator ausströmende Gas über die Lanze 1 in den ersten Teilbereich 12 (Brustgurtes) des Airbelts 2 leitbar ist. Das im ersten Teilbereich 12 des Airbelt 2 ankommende Gas bläst dann den Airbelt 2 im Bereich des Brustgurtes auf.

## Patentansprüche

1. Lanze (1) zum Leiten von Gas in einen Airbelt (2), wobei die Lanze (1) mit einer Gaseinbringungsvorrichtung zum Aufblasen der Lanze (1) und des Airbelts (2) zum Einbringen eines Gases koppelbar ist,
**dadurch gekennzeichnet, dass**
die Lanze (1) ein Schlauchgewebe (4) umfasst,
welches Schlauchgewebe (4) eine Vielzahl von sich in Kettfadenrichtung (9) erstreckender Kettfäden (7) aus einem Kettfadenmaterial und eine Vielzahl von sich in Schussfadenrichtung (10) erstreckender Schussfäden (8) aus einem Schussfadenmaterial umfasst,
wobei das lokale Verhältnis der Anzahl der Kettfäden (7) pro 1,0cm Messlänge zu der Anzahl der Schussfäden (8) pro Gewebelage und pro 1,0cm 1,5 bis 3,8, vorzugsweise 2,16 ist, sodass die Lanze im Inneren des Airbelts (2) mitsamt dem Airbelt um eine Umlenkungsvorrichtung (13) führbar ist,
und zumindest als eine Gassperrschicht ausgebildete Kunststoffschicht (6) umfasst,
sodass die Lanze (1) eine definierte Gasdichtigkeit aufweist.

2. Lanze (1) nach Anspruch 1, **dadurch gekennzeichnet, dass**
die Kunststoffschicht (6) in einem Schlauchgewebeteilbereich des Schlauchgewebes (4) integrativ und/oder an zumindest einer inneren und/oder äußeren Mantelteiloberfläche einer Manteloberfläche (5) des Schlauchgewebes (4) mit einer lokalen Kunststoffdicke ausgebildet ist.

3. Lanze (1) nach einem der Ansprüche 1 bis 2, **dadurch gekennzeichnet, dass**
bei einem Innendurchmesser von 25,0 +/- 1,5mm der schlauchförmig ausgebildeten Lanze (1) das Schlauchgewebe (4) in Kettfadenrichtung (9) 180+/-5 Kettfäden (7) und in Schussfadenrichtung (10) 104+/-10 Schussfäden (8) pro 10,0cm Erstreckungslänge der Lanze (1) und pro Gewebelage der Lanze (1) aufweist.

4. Lanze (1) nach einem der Ansprüche 1 bis 3, **dadurch gekennzeichnet, dass**
die Kettfäden (7) und/oder die Schussfäden (8) über den gesamten Bereich der Lanze oder in Teilbereichen der Lanze (1) einen Titer von 500dtex bis 12000detex, vorzugsweise jeweils 1100dtex über den gesamten Bereich der Lanze aufweisen.

5. Lanze (1) nach einem der Ansprüche 1 bis 4, **dadurch gekennzeichnet, dass** das Kettfadenmaterial und/oder das Schussfadenmaterial eine synthetische Faser wie beispielsweise Aramid-monofil, Aramid-multifil, Polyester-monofil, Polyester-multifil, Polyamid-monofil oder Polyamid-multifil umfasst.

6. Lanze (1) nach einem der Ansprüche 1 bis 5, **dadurch gekennzeichnet, dass**
die Kunststoffschicht (6) eine Schicht umfassend Silikon, Polyurethane, Polyvinylchlorid, Polytetrafluorethylen ist.

7. Lanze (1) nach einem der Ansprüche 1 bis 6, **dadurch gekennzeichnet, dass**
die Gesamtdicke der Lagen der Lanze (1) circa 1,1mm +/- 0,3mm bei einer Wandstärke der Lanze (1) von circa 0,55mm +/- 0,15mm beträgt.

8. Lanze (1) nach einem der Ansprüche 1 bis 7, **dadurch gekennzeichnet, dass**
die Lanze (1) einen Werkstoff zum Unterbinden eines Durchtrennens der Lanze (1) durch ein scharfkantiges Werkstück umfasst.

9. Lanze (1) nach einem der Ansprüche 1 bis 8, **dadurch gekennzeichnet, dass**
die Lanze (1) zumindest teilweise vom Airbelt (2) umhüllt ist, wobei die Lanze (1) einen weiteren Werkstoff zum Unterbinden einer Beschädigung des Airbelts zufolge einer Formveränderung der Lanze (1) umfasst.

10. Airbelt umfassend eine Lanze (1) nach einem der Ansprüche 1 bis 9 oder mehrere Lanzen (1) nach einem der Ansprüche 1 bis 9.

## Claims

1. A lance (1) for directing gas into an air belt (2), said lance (1) being coupleable to a gas insertion device for inflating said lance (1) and said air belt (2) for inserting a gas,
**characterised in that**
the lance (1) comprises a tubular fabric (4),
which tubular fabric (4) comprises a plurality of warp threads (7) of a warp material extending in the warp direction (9), and a plurality of weft threads (8) of a weft material extending in the weft direction (10),
wherein the local ratio of the number of warp threads (7) per 1.0 cm measuring length to the number of weft threads (8) per fabric ply und per 1.0 cm is 1.5 to 3.8, preferably 2.16, such that the lance within the air belt (2) along with the air belt is guidable around a redirecting device (13),
and comprises at least a plastic layer (6) formed as a gas barrier layer, such that the lance (1) has a defined gas tightness.

2. The lance (1) according to claim 1, **characterised in that** the plastic layer (6) is formed integratively in a tubular fabric subarea of the tubular fabric (4) and/or on at least an internal and/or external overcoat partial surface of an overcoat surface (5) of the tubular fabric (4) in a local plastic thickness.

3. The lance (1) according to any one of claims 1 to 2, **characterised in that** at an internal diameter of 25.0 +/- 1.5 mm of the tube-shaped lance (1), the tubular fabric (4) has 180 +/- 5 warp threads (7) in the warp direction (9) and 104 +/- 10 weft threads (8) in the weft direction (10) per 10.0 cm extension length of the lance (1) and per fabric ply of the lance (1).

4. The lance (1) according to any one of claims 1 to 3, **characterised in that** the warp threads (7) and/or the weft threads (8) have a titre of 500 dtex to 12,000 dtex throughout the total area of the lance or in subareas of the lance (1), preferably 1,100 dtex throughout the total area of the lance.

5. The lance (1) according to any one of claims 1 to 4, **characterised in that** the warp material and/or the weft material comprises a synthetic fibre such as aramid monofil, aramid multifil, polyester monofil, polyester multifil, polyamide monofil or polyamide multifil.

6. The lance (1) according to any one of claims 1 to 5, **characterised in that** the plastic layer (6) is a layer comprising silicone, polyurethane, polyvinyl chloride, polytetrafluoroethylene.

7. The lance (1) according to any one of claims 1 to 6, **characterised in that** the total thickness of the plies of the lance (1) is about 1.1 mm +/- 0.3 mm at a wall thickness of the lance (1) of about 0.55 mm +/- 0.15 mm.

8. The lance (1) according to any one of claims 1 to 7, **characterised in that** the lance (1) comprises a material for preventing cutting of the lance (1) by a sharp-edged workpiece.

9. The lance (1) according to any one of claims 1 to 8, **characterised in that** the lance (1) is covered at least partially by the air belt (2), said lance (1) comprising a further material for preventing damage to the air belt due to a change in form of the lance (1).

10. An air belt comprising the lance (1) according to any one of claims 1 to 9 or a plurality of lances (1) according to any one of claims 1 to 9.

## Revendications

1. Lance (1) pour diriger du gaz dans une ceinture gonflable (2), ladite lance (1) pouvant être couplée à un dispositif d'introduction de gaz pour gonfler la lance (1) et la ceinture gonflable (2) pour introduire un gaz,
**caractérisée en ce que**
la lance (1) comprend un tissu tubulaire (4),
ledit tissu tubulaire (4) comprenant une pluralité de fils de chaîne (7) faits d'un matériau de chaîne s'étendant dans le sens chaîne (9) et une pluralité de fils de trame (8) faits d'un matériau de trame s'étendant dans le sens trame (10),
le rapport local du nombre des fils de chaîne (7) par 1,0 cm de longueur de mesure au nombre des fils de trame (8) par couche de tissu et par 1,0 cm étant de 1,5 à 3,8, de préférence 2,16, de sorte que la lance à l'intérieur de la ceinture gonflable (2) et la ceinture gonflable peuvent être guidées autour d'un dispositif de déviation (13),
et comprend au moins une couche de matière plastique (6) réalisée en tant que couche de blocage de gaz, de sorte que la lance (1) présente une étanchéité au gaz définie.

2. Lance (1) selon la revendication 1, **caractérisée en ce que** la couche de matière plastique (6) est réalisée intégrativement dans un secteur partiel du tissu tubulaire (4) et/ou sur au moins une partie d'une surface d'enveloppe (5) intérieure et/ou extérieure du tissu tubulaire (4) à une épaisseur de matière plastique locale.

3. Lance (1) selon l'une des revendications 1 à 2, **caractérisée en ce que** dans le cas d'un diamètre intérieur de 25,0 +/- 1,5 mm de la lance (1) réalisée sous forme de tube, le tissu tubulaire (4) présente 180 +/- 5 fils de chaîne (7) dans le sens chaîne (9) et 104 +/- 10 fils de trame (8) dans le sens trame (10) par 10,0 cm de longueur d'extension de la lance (1) et par couche de tissu de la lance (1).

4. Lance (1) selon l'une des revendications 1 à 3, **caractérisée en ce que** les fils de chaîne (7) et/ou les fils de trame (8) présentent un titre de 500 dtex à 12 000 dtex sur toute la zone de la lance ou dans des secteurs partiels de la lance (1), de préférence 1 100 dtex sur toute la zone de la lance (1).

5. Lance (1) selon l'une des revendications 1 à 4, **caractérisée en ce que** le matériau de chaîne et/ou le matériau de trame comprend une fibre synthétique telle que aramide-monofil, aramide-multifil, polyester-monofil, polyester-multifil, polyamide-monofil ou polyamide-multifil.

6. Lance (1) selon l'une des revendications 1 à 5, **caractérisée en ce que** la couche de matière plastique (6) est une couche comprenant silicone, polyuréthane, polyvinylchlorure, polytétrafluoroéthylène.

7. Lance (1) selon l'une des revendications 1 à 6, **caractérisée en ce que** l'épaisseur totale des couches de la lance (1) est de l'ordre de 1,1 mm +/- 0,3 mm dans le cas d'une épaisseur de paroi de la lance (1) de l'ordre de 0,55 mm +/-0,15 mm.

8. Lance (1) selon l'une des revendications 1 à 7, **caractérisée en ce que** la lance (1) comprend un matériau pour empêcher une coupure de la lance (1) par une pièce à arêtes vives.

9. Lance (1) selon l'une des revendications 1 à 8, **caractérisée en ce que** la lance (1) est enveloppée au moins partiellement par la ceinture gonflable (2), ladite lance (1) comprenant un autre matériau pour empêcher l'endommagement de la ceinture gonflable à la suite d'un changement de forme de la lance (1).

10. Ceinture gonflable comprenant une lance (1) selon l'une des revendications 1 à 9 ou une pluralité de lances (1) selon l'une des revendications 1 à 9.
